# EUROPÄISCHE PATENTSCHRIFT

(11) **EP 0 616 117 B1**
(45) Veröffentlichungstag und Bekanntmachung des Hinweises auf die Patenterteilung: **25.09.1996**
(21) Anmeldenummer: 94810135.7
(22) Anmeldetag: 03.03.1994
(51) Int. Cl.: F02B 67/00, F01C 1/02, F02B 33/36, F16J 15/26

(54) **Brennkraftmaschine mit Lader nach dem Verdrängerprinzip**
Internal combustion engine with supercharger of the positive displacement type
Moteur à combustion interne avec dispositif suralimentation à déplacement positif

(30) Priorität: 17.03.1993 CH 808/93
(43) Veröffentlichungstag der Anmeldung: 21.09.1994
(73) Patentinhaber: AGINFOR AG für industrielle Forschung, CH-5430 Wettingen (CH)
(72) Erfinder: Spinnler, Fritz, CH-5507 Mellingen (CH)
(74) Vertreter: Klein, Ernest

(56) Entgegenhaltungen:
- DE-A- 3 839 252
- DE-B- 1 048 075

## Beschreibung

Die Erfindung betrifft eine Hubkolbenbrennkraftmaschine mit mechanisch angetriebenem Lader gemäss Oberbegriff des Patentanspruchs 1.

Die Aufladung von Brennkraftmaschinen mittels eines von der Antriebswelle angetriebenen Laders ist dann sinnvoll, wenn aus Gründen des Treibstoffverbrauches beim Einsatz der Brennkraftmaschine in einem Automobil ein vorgegebenes Leistungsziel sowohl stationär als auch instationär anzustreben ist, welches beim reinen Betrieb der Brennkraftmaschine unter Atmosphärendruck nicht erreicht werden kann; nur als Saugmotor betrieben genügt die Grösse der Brennkraftmaschine nicht. Eine solchermassen dimensionierte Brennkraftmaschine hat aber den Vorteil, dass die im automobilen Betrieb sehr oft benutzte Teillast bei besserem Treibstoffverbrauch gefahren werden kann, als wenn eine grössere Brennkraftmaschine eingesetzt wird, welche zur Erzielung der geforderten Vollastwerte keine Aufladung benötigt.

Meistens sind Brennkraftmaschinen für automobile Zwecke als Hubkolbenmotoren mit mehreren Zylindern ausgeführt. Aus Gründen der Laufruhe wählt man Zylinderzahlen und -anordnungen, die einen Ausgleich der freien Massenkräfte erlauben. Die freien Massenkräfte entstehen durch die Kinematik der Kolbenbewegung, welche durch die Geometrie des Kurbeltriebes vorgegeben ist. Es ist bekannt, dass eine Zylinderzahl von 6 mit in Reihe angeordneten Zylindern für den Viertakt-Betrieb einen vollstänigen Ausgleich der Massenkräfte ohne bedeutende Zusatzaufwendungen erlaubt. Bei 4-Zylindermotoren mit in Reihe angeordneten Zylindern benötigt man Ausgleichswellen mit Fliehgewichten, um die freien Massenkräfte auszugleichen, will man einen vibrationsfreien Lauf der Brennkraftmaschine erreichen.

Wie bereits erwähnt, ist es aus Gründen eines guten Treibstoffverbrauchs von Vorteil, Brennkraftmaschinen in der automobilen Anwendung mit kleinem Hubvolumen einzusetzen und diese zur Erzielung eines geforderten Leistungszieles mit einem von der Antriebswelle der Brennkraftmaschine angetriebenen Lader auszurüsten. Brennkraftmaschinen mit kleinem Hubvolumen weisen in der Regel auch kleinere Zylinderzahlen auf als solche mit grossem Hubvolumen. Der Ausgleich der freien Massenkräfte gewinnt bei kleinen Brennkraftmaschinen mit 4 und weniger Zylindern an Bedeutung.

### Stand der Technik

Eine Hubkolbenbrennkraftmaschine mit mechanisch angetriebenem Lader der eingangs genannten Art ist bekannt aus der DE-B-1 048 075. Dort wird angeregt, den Spülkompressor selbst als Ausgleicher für die freie Restmassenkraft zu benutzen. Dies erfolgt aufgrund der bekannten Überlegung, zum Ausgleich der übrigbleibenden Massenkraft anlässlich des Ausgleichs der hin und hergehenden Massen zusätzlich zwei Massen symmetrisch zu einer durch die Kurbelwellenachse und senkrecht zur Maschinenlängsachse gelegten Ebene anzubringen. Eine dieser zwei Massen ist dabei von der Kurbelwelle anzutreiben. Als Spülkompressor bietet sich somit ein mehrschaufeliges Rootsgebläse an, dessen auf beiden Rotoren angeordnete Hohlschaufeln auf geeignete Weise mit Ausgleichgewichten bestückt werden.

Die beiden Zusatzmassen müssen mit der Drehzahl der Kurbelwelle rotieren und untereinander gegenläufig sein.

Die Aufladung von Brennkraftmaschinen mittels eines von der Antriebswelle angetriebenen Verdrängerladers ist Stand der Technik. Die Verdrängermaschine kann eine Maschine der Spiralbauart sein. Eine solche Maschine ist beispielsweise durch die DE-A-38 39 252 bekannt. Ein nach diesem Prinzip aufgebauter Verdichter zeichnet sich durch eine nahezu pulsationsfreie Förderung der Luft oder einem aus Luft-Kraftstoff bestehenden gasförmigen Arbeitsmittels aus und ist für die Aufladung für Brennkraftmaschinen besonders geeignet.

Der Lader wird von der Antriebswelle der Brennkraftmaschine angetrieben. Der Lader selbst besteht aus einem Gehäuse mit darin spiralförmig angeordneten Förderräumen und einem diesen Förderräumen zugeordneten Verdrängerkörper, der auf einem gegnüber dem Gehäuse exzentrisch antreibbaren Läufer derart gehalten ist, dass während des Betriebes jeder seiner Punkte eine von den Umfangswänden der Verdrängerkammer begrenzte Kreisbewegung ausführt, wozu auf der Antriebswelle eine Exzenterscheibe angeordnet ist. Bei dieser Maschine sowie im übrigen bei allen bekannten Spiralverdichtern, bei denen der zur translatorischen Führung des Läufers eine Vorrichtung zum Beispiel in der Form einer zu der Antriebswelle des Läufers synchron laufenden Führungswelle vorgesehen ist, erfolgt der Ausgleich der Fliehkräfte, welche durch die Exzenterscheibe und durch den Läufer hervorgerufen werden, durch Gegengewichte, die auf der Antriebswelle angebracht sind.

Der Antrieb des Laders erfolgt in der Regel über einen Riementrieb mit einem bestimmten Uebersetzungsverhältnis zur Antriebswelle der Brennkraftmaschine. Die Drehzahl des Laders ist im Falle der Spiralmaschine um einen Faktor von etwa 1,5 bis 2,5 mal höher als jene der Brennkraftmaschine.

### Darstellung der Erfindung

Es ist deshalb die Aufgabe der Erfindung, die kinematischen Eigenschaften eines orbitierenden Spiralladers so abzuwandeln, dass dieser den Ausgleich der freien Massenkräfte der Brennkraftmaschine bewirkt.

Erfindungsgemäss wird dies durch die kennzeichnenden Merkmale des Anspruchs 1 erreicht.

Der besonderem Vorteil der Erfindung ist darin zu sehen, dass die Ausgleichsgewichte auf der Antriebswelle des Spiralladers fortgelassen werden können. Diese üblichen Ausgleichsgewichte eines zum Stand der Technik zählenden Spiralladers bewirken den vibrationfreien Lauf des Laders selbst. Durch das Weglassen dieser Gegengewichte erzeugt der Lader nunmehr selbst freie Massenkräfte, die durch Synchronisation der Drehwinkellage der Lader-Antriebswelle mit der Brennkraftmaschinen-Antriebswelle den freien Massenkräften der Brennkraftmaschine so entgegenwirken, dass sie diese aufheben.

Die eingangs genannte, bekannte Spiralmaschine weist nebst der Antriebswelle auch eine Führungswelle auf, die ihrerseits mittels eines Zahnriementriebes mit der Antriebswelle winkelsynchron geführt ist. Besonders zweckmässig ist es, wenn bei der notwendigen Synchronisation der Laderantriebswelle mit der Antriebswelle der Brennkraftmaschine auch die Führungswelle in diesen Synchronriementrieb eingebunden wird. Hierdurch entfällt der separate Synchronisationstrieb zwischen der Lader-Antriebswelle und dessen Führungswelle. Es werden damit sowohl die Funktionen des Laderantriebes als auch dessen Synchronisation mit der Antriebswelle der Brennkraftmaschine und der Führungswelle mit nur einem Maschinenelement, welches beispielsweise ein Zahnriemen sein kann, ausgeübt.

### Kurze Beschreibung der Zeichnung

In der Zeichnung ist ein Ausführungsbeispiel der Erfindung schematisch dargestellt.
Es zeigen:
- Fig. 1: einen Querschnitt durch den Lader;
- Fig. 2: einen Längsschnitt durch den Lader mit erfindungsmässiger Ausbildung der Antriebswelle;
- Fig. 3: eine schematische Ansicht einer Brennkraftmaschine mit erfindungsmässig angeordnetem Lader und Riementrieb.

### Weg zur Ausführung der Erfindung

Zwecks Erläuterung der Funktionsweise des Verdichters, welche nicht Gegenstand der Erfindung ist, wird auf die bereits genannte DE-A-38 39 252 verwiesen. Nachstehend wird nur der für das Verständnis notwendige Maschinenaufbau und Prozessablauf kurz beschrieben.

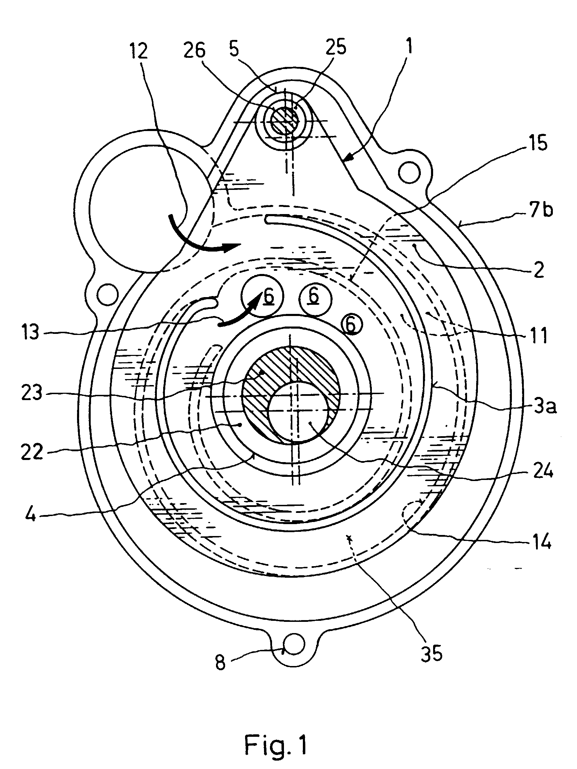

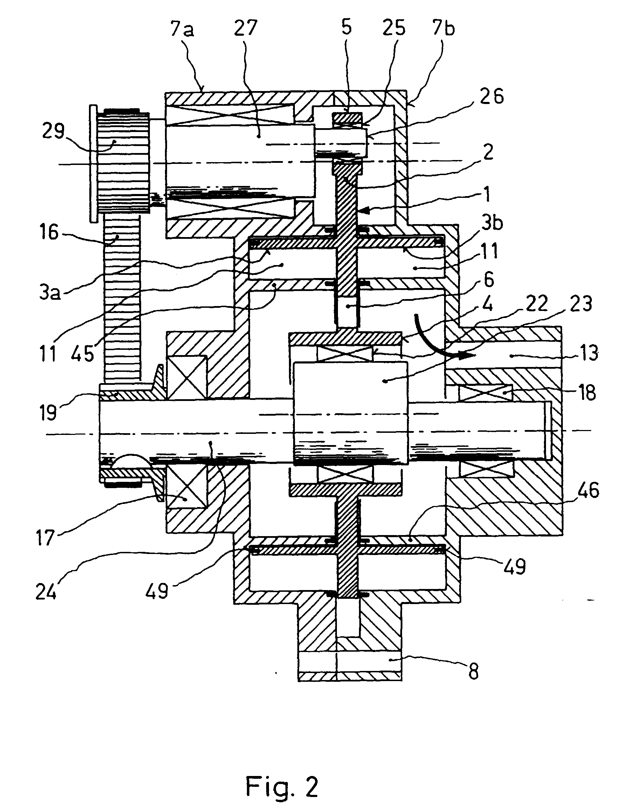

In Fig. 1 ist die Gehäusehälfte 7b mit dem Förderraum 11 und dem eingelegten Verdränger gezeigt. Mit 1 ist der Läufer der Maschine insgesamt bezeichnet. An beiden Seiten der Scheibe 2 ist je ein spiegelbildlich, spiralförmig ausgebildeter Verdrängerkörper angeordnet. Es handelt sich um die Leisten 3a, 3b, die senkrecht auf der Scheibe 2 gehalten sind (Fig. 1, 2). Die Spirale selbst ist im gezeigten Beispiel aus mehreren aneinander anschliessenden Kreisbögen gebildet. Mit 4 ist die Nabe bezeichnet, mit welcher die Scheibe 2 über ein Lager 22 auf einer Exzenterscheibe 23 gelagert ist. Die Exzenterscheibe ist ihrerseits Teil der Antriebswelle 24.

Mit 5 ist ein radial ausserhalb der Leisten 3a, 3b angeordnetes Auge bezeichnet für die Aufnahme eines Führungslagers 25, welches auf einem Exzenterbolzen 26 aufgezogen ist. Dieser ist seinerseits Teil einer Führungswelle 27 (Fig. 1, 2). Am Spiralende sind in der Scheibe Durchtrittsfenster 6, vorgesehen, damit das Medium von der einen Scheibenseite zur anderen gelangen kann, beispielsweise um in einem nur einseitig angeordneten zentralen Auslass 13 abgezogen zu werden.

In Fig. 1 ist die in Fig. 2 rechts dargestellte Gehäusehälfte 7b des aus zwei Hälften 7a, 7b zusammengesetzten, über Befestigungsaugen 8 zur Aufnahme von Verschraubungen miteinander verbundenen Maschinengehäuses gezeigt. 11 bezeichnet den Förderraum, der nach der Art eines spiralförmigen Schlitzes in die beiden Gehäusehälften eingearbeitet ist. Dieser Schlitz verläuft von einem am äusseren Umfang der Spirale im Gehäuse angeordneten Einlass 12 zu einem im Gehäuseinneren vorgesehenen Auslass 13. Er weist im wesentlichen parallele, in gleichbleibendem Abstand zueinander angeordnete Zylinderwände 14, 15 auf, die im vorliegenden Fall wie die Verdrängerkörper der Scheibe 2 eine Spirale von ca. 360° umfassen. Zwischen diesen Zylinderwänden greift der Verdrängerkörper bestehend aus den Leisten 3a, 3b ein, dessen Krümmung so bemessen ist, dass die Leisten die inneren und die äusseren Zylinderwände 15, 14 des Gehäuses beispielsweise an zwei Stellen nahezu berühren. An den freien Stirnseiten der Leisten 3a, 3b und der Stege 45, 46 sind Dichtstreifen 49 in entsprechenden Nuten eingelegt. Mit ihnen werden die Arbeitsräume gegen die Seitenwände des Gehäuses resp. Verdrängerscheibe 2 abgedichtet.

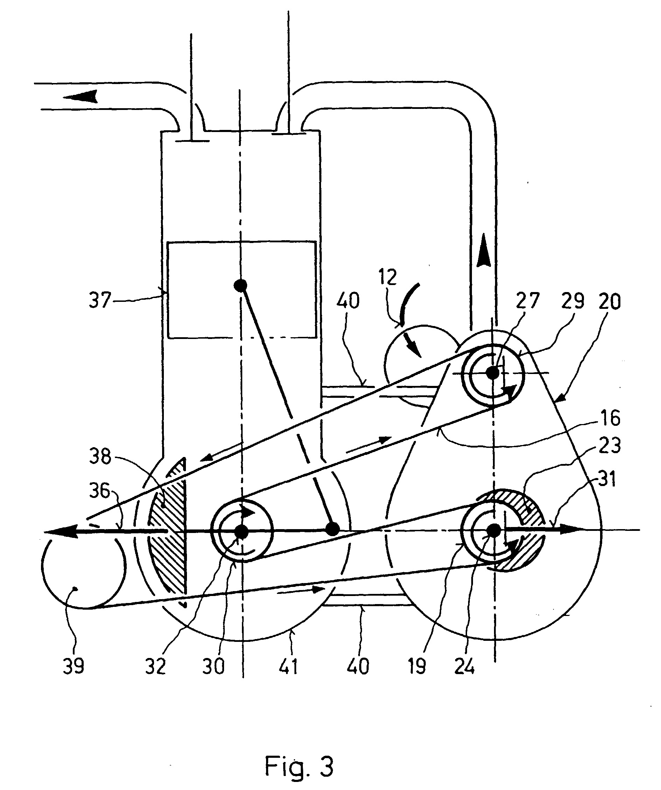

Den Antrieb und die Führung des Läufers 1 besorgen die zwei beabstandeten Exzenteranordnungen 23, 24 resp. 26, 27. Die Antriebswelle ist antriebsseitig in einem Lager 17 und luftseitig in einem Lager 18 gelagert. An ihrem aus der Gehäusehälfte 7a herausragenden Ende ist sie mit der Antriebsriemenscheibe 19, die gleichzeitig auch Synchronisationsriemenscheibe ist, verbunden. Die Führungswelle 27 ragt ihrererseits ebenfalls aus der Gehäusehälfte 7a heraus und weist eine zur Riemenscheibe 19 identisch profilierte Riemenscheibe 29 auf. Um in den Totpunktlagen eine eindeutige Führung des Läufers 1 zu erzielen, werden die beiden Exzenteranordnungen über einen Zahnriementrieb 16 winkelgenau synchronisiert, wobei in diesen Zahnriementrieb erfindungsgemäss auch die Antriebsriemenscheibe 30 der Brennkraftmaschine eingebunden ist (Fig. 3). Der im Lader sich befindende Doppelexzenterantrieb sorgt dafür, dass alle Punkte der Läuferscheibe 2 und auch alle Punkte der beiden Leisten 3a und 3b eine kreisförmige Verschiebebewegung ausführen. Infolge der mehrfachen abwechselnden Annäherungen der Leisten 3a, 3b an die innere 15 und äussere 14 Zylinderwand des Förderraumes 11 ergeben sich auf beiden Seiten der Leisten sichelförmige, das Arbeitsmedium einschliessende Arbeitsräume 35, die während des Antriebs der Läuferscheibe durch den Förderraum in Richtung auf den Auslass 13 verschoben werden. Hierbei verringern sich die Volumina dieser Arbeitsräume und der Druck des Arbeitsmittels wird entsprechend erhöht.

Die synchrone Verbindung der Antriebswelle 32 der Brennkraftmaschine über die Riemenscheibe 30 mit den Exzenterwellen 24, 27 über die Riemenscheiben 19, 29 mit dem Zahnrientrieb 16 der als Lader eingesetzten Spiralmaschine erlaubt die Beeinflussung der freien Massenkräfte der Brennkraftmaschine durch die Ausgleichsfliehkraft 31 der Spiralmaschine, da die Antriebswelle 24 erfindungsgemäss keine Gegengewichte zur Kompensation der durch die exzentrische Bewegung der Exzenterscheibe 23 und des Läufers 1 hervogerufenen Fliehkräfte aufweist (Fig. 2, 3). Die Synchronisation erfolgt zweckmässigerweise so, dass sich die freien Massenkräfte der Brennkraftmaschine und jene der ausgeführten Spiralmaschine aufheben oder zumindest so beeinflussen, dass die resultierenden freien Massenkräfte/-momente zum Zwecke eines vibrationsarmen Brennkraftmaschinenbetriebes reduziert werden.

Das in Fig. 3 dargestellte Schema dient als Beispiel und zeigt den Fall einer Zweizylinder-Hubkolbenbrennkraftmaschine mit parallel laufenden Kolben 37. Die Dimensionierung des Ausgleichsgewichtes 38 der Brennkraftmaschine ist ein Kompromiss wenn keine Ausgleichswelle eingesetzt wird; in den Totpunktlagen der Kolben 37 ist die durch das Ausgleichsgewicht 38 erzeugte Ausgleichskraft 36 zu klein, in der in Fig. 3 dargestellten Lage der Kolben 37 zu hoch.

Abhilfe kann geschaffen werden, wenn der Spirallader mit einem Übersetzungsverhältnis zwischen der Antriebswelle der Brennkraftmaschine 32 und jener des Laders 24 und dessen Führungswelle 27 exakt 1 ist und die Winkellage der Kurbelwelle 32 und der Antriebswelle 24 in der in Fig. 3 dargestellten Lage der Kolben 37 so ist, dass sich die Ausgleichs-Fliehkraft 36 der Kurbelwelle 32 und die der erfindungsgemäss ausgeführten Antriebswelle 31 entgegenwirken. Durch die Umkehrung des Drehsinns des Laders Gegenüber der Brennkraftmaschine ergibt sich die folgerichtige Addition der Ausgleichsfliehkräfte 31, 36 in den Totpunktlagen der Kolben. (Der Läufer 1 ist in Fig. 3 nicht dargestellt).

Der Zahnriementrieb 16 besteht im dargestellten Beispiel aus einem Riemen mit beidseitiger identischer Profilierung. Mit 39 ist eine Spannrolle, welche auch ein anderes nicht näher bezeichnetes Hilfsaggregat antreiben kann, dargestellt. Mit 40 ist die Verbindung zwischen Ladergehäuse 7a,7b und Kurbelgehäuse der Brennkraftmaschine 41 bezeichnet.

Das Übersetzungsverhältnis zwischen der Antriebswelle der Brennkraftmaschine 32 und der Antriebswelle 24 der Spiralmaschine ist z.B. dann exakt zwei, wenn es um die Beeinflussung resp. Kompensation der freien Massenkräfte/-momente der 2. Ordnung bei der Brennkraftmaschine geht.

### BEZEICHNUNGSLISTE

- 1: Läufer
- 2: Scheibe
- 3a, 3b: Leiste
- 4: Nabe
- 5: Auge
- 6: Durchtrittsfenster
- 7a, 7b: Gehäusehälfte
- 8: Befestigungsauge
- 9: Aufnahme für Antriebswelle
- 10: Aufnahme für Nebenwelle
- 11: Förderraum
- 12: Einlass
- 13: Auslass
- 14: äussere Zylinderwand
- 15: innere Zylinderwand
- 16: Zahnriementrieb
- 17: Lager
- 18: Lager
- 19: Antriebsriemenscheibe
- 20: Lader
- 22: Lager
- 23: Exzenterscheibe
- 24: Antriebswelle des Laders
- 25: Führungslager
- 26: Exzenterbolzen
- 27: Führungswelle
- 29: Führungsriemenscheibe
- 30: Antriebsriemenscheibe der Brennkraftmaschine
- 31: Ausgleichsfliehkraft des Laders
- 32: Kurbelwelle der Brennkraftmaschine
- 35: sichelförmiger Raum
- 36: Ausgleichsfliehkraft der Brennkraftmaschine
- 37: Kolben der Brennkraftmaschine
- 38: Ausgleichsgewicht der Brennkraftmaschine
- 39: Spannrolle
- 40: Verbindung
- 41: Kurbelgehäuse der Brennkraftmaschine
- 45: Steg in 7a
- 46: Steg in 7b
- 49: Dichtstreifen

## Patentansprüche

1. Hubkolbenbrennkraftmaschine mit mechanisch angetriebenem Lader (20), deren Zylinderzahl und Zylinderanordnung so bemessen ist, dass noch freie Massenkräfte/Massenmomente bestehen,
- wobei eine Welle des mechanischen Laders (20) parallel zur Kurbelwelle (32) der Hubkolbenbrennkraftmaschine angeordnet und von der Kurbelwelle angetrieben ist,
- und wobei der Lader (20) auf mindestens einer seiner Wellen ein Gegengewicht hat, welches im Betrieb den freien Massenkräften an der Hubkolbenbrennkraftmaschine entgegenwirkt,
dadurch gekennzeichnet,
- dass der Lader ein Spirallader mit exzentrisch kreisenden Verdrängerkörpern ist, dessen auf der Antriebswelle (24) angeordnete Exzenterscheibe (23) zusammen mit dem Läufer (1) das Gegenwicht ist zur Entgegenwirkung der freien Massenkräfte/Massenmomente der Hubkolbenbrennkraftmaschine, wobei auf der Antriebswelle (24) keine Ausgleichgewichte angeordnet sind ,
- dass das Übersetzungsverhältnis zwischen Antriebswelle (24) und Kurbelwelle (32) ganzzahlig ist,
- dass der Lader (20) winkelsynchron angetrieben ist, wobei die Antriebswelle (24) und die Kurbelwelle (32) umgekehrten Drehsinn aufweisen,
- und wobei die Winkellage des Ausgleichgewichtes (38) der Kurbelwelle (32) und der Exzenterscheibe (23) der Antriebswelle (24) so abgestimmt ist, dass sich die jeweiligen Ausgleichs-Fliehkräfte entgegenwirken.

2. Hubkolbenbrennkraftmaschine nach Anspruch 1 dadurch gekennzeichnet, dass der Spirallader eine Antriebswelle (24) und eine Führungswelle (27) aufweist, welche beide mit der Kurbelwelle (32) der Hubkolbenbrennkraftmaschine in einen Sychronisationsriementrieb (16) eingebunden sind.

## Claims

1. Reciprocating-piston internal combustion engine having a mechanically driven supercharger (20), the number of cylinders and cylinder arrangement of which are dimensioned such that free inertia forces/moments of inertia persist,
- a shaft of the mechanical supercharger (20) being disposed parallel to the crankshaft (32) of the reciprocating-piston internal combustion engine and being driven by the crankshaft,
- and the supercharger (20), on at least one of its shafts, having a counterweight which, during operation, counteracts the free inertia forces present at the reciprocating-piston internal combustion engine,
characterized in that
- the supercharger is a spiral supercharger having eccentrically crossing displacement bodies, the eccentric disc (23) of which spiral supercharger, which is disposed on the drive shaft (24), forms together with the rotor (1) the counterweight to counteract the free inertia forces/moments of inertia of the reciprocating-piston internal combustion engine, there being no balancing weights disposed on the drive shaft (24),
- the transmission ratio between the drive shaft (24) and the crankshaft (32) is a whole number,
- the supercharger (20) is driven in angular synchronization, the drive shaft (24) and the crankshaft (32) having a reverse direction of rotation,
- and the angular position of the balancing weight (38) of the crankshaft (32) and of the eccentric disc (23) of the drive shaft (24) being coordinated such that the respective compensating centrifugal forces counteract one another.

2. Reciprocating-piston internal combustion engine according to Claim 1, characterized in that the spiral supercharger has a drive shaft (24) and a guide shaft (27), which are both incorporated with the crankshaft (32) of the reciprocating-piston internal combustion engine into a synchronization belt drive (16).

## Revendications

1. Moteur à combustion interne à pistons alternatifs avec un dispositif de suralimentation entraîné mécaniquement (20), dont le nombre de cylindres et l'agencement des cylindres sont dimensionnés de telle façon qu'il existe encore des forces et/ou des moments d'inertie libres,
- dans lequel un arbre du dispositif de suralimentation mécanique (20) est disposé parallèlement au vilebrequin (32) du moteur à combustion interne à pistons alternatifs et est entraîné par le vilebrequin,
- et dans lequel le dispositif de suralimentation (20) porte sur au moins un de ses arbres un contrepoids qui en fonctionnement s'oppose aux forces d'inertie libres du moteur à combustion interne à pistons alternatifs,
caractérisé
- en ce que le dispositif de suralimentation est un dispositif de suralimentation à spirale avec des corps de déplacement en mouvement circulaire excentrique, dont le disque d'excentrique (23) disposé sur l'arbre primaire (24) forme avec le rotor (1) le contrepoids pour s'opposer aux forces et/ou moments d'inertie libres du moteur à combustion interne à pistons alternatifs, aucun poids d'équilibrage n'étant disposé sur l'arbre primaire (24),
- en ce que le rapport de démultiplication entre l'arbre primaire (24) et le vilebrequin (32) est un nombre entier,
- en ce que le dispositif de suralimentation (20) est entraîné en synchronisme angulaire, l'arbre primaire (24) et le vilebrequin (32) présentant des sens de rotation opposés,
- et dans lequel la position angulaire du poids d'équilibrage (38) du vilebrequin (32) et du disque d'excentrique (23) de l'arbre primaire (24) est adaptée de telle façon que les forces centrifuges d'équilibrage respectives soient en opposition.

2. Moteur à combustion interne à pistons alternatifs suivant la revendication 1, caractérisé en ce que le dispositif de suralimentation à spirale présente un arbre primaire (24) et un arbre de guidage (27), qui sont tous les deux intégrés dans une commande de synchronisation par courroie (16), avec le vilebrequin (32) du moteur à combustion interne à pistons alternatifs.
